# EUROPÄISCHE PATENTSCHRIFT

(11) **EP 1 873 500 B1**
(45) Veröffentlichungstag und Bekanntmachung des Hinweises auf die Patenterteilung: **02.06.2010**
(21) Anmeldenummer: 07010943.4
(22) Anmeldetag: 04.06.2007
(51) Int. Cl.: G01F 23/24, A47J 31/44

(54) **Füllstandssensoreinrichtung für einen Vorratsbehälter mit einem Auslauf zur Bevorratung eines elektrisch leitfähigen Fluids eines Haushaltsgeräts**
Fill level sensor device for a storage container with an outlet for storing an electrically conductible fluid for a domestic appliance
Dispositif de capteur de remplissage pour un réservoir doté d'une purge destinée à l'approvisionnement d'un liquide pouvant conduire de l'électricité d'un appareil ménager

(30) Priorität: 26.06.2006 DE 102006029606
(43) Veröffentlichungstag der Anmeldung: 02.01.2008
(73) Patentinhaber: Miele & Cie. KG, 33332 Gütersloh (DE)
(72) Erfinder: Wenzel, Meierfrankenfeld, 33334 Gütersloh (DE)

(56) Entgegenhaltungen:
- WO-A-98/27409
- WO-A-03/076882
- GB-A- 1 287 148
- US-A- 5 907 993

## Beschreibung

Die Erfindung betrifft eine Füllstandssensoreinrichtung, die ein Haushaltsgerät und einen Vorratsbehälter mit einem Auslauf zur Bevorratung eines elektrisch leitfähigen Fluids des Haushaltsgeräts aufweist, nach der im Oberbegriff des Anspruchs 1 genannten Art.

Eine derartige Füllstandssensoreinrichtung ist beispielsweise bereits aus der DE 35 41 752 A1 bekannt. Die bekannte Füllstandssensoreinrichtung beinhaltet eine elektrische Steuerung, die eine Auswerteschaltung, einen Speicher und eine Stromversorgung aufweist. Der Vorratsbehälter ist aus einem elektrisch leitendem Material hergestellt, wobei in dessen Vorratsraum eine mit der elektrischen Stromversorgung stromübertragend verbundene und von dem Vorratsbehälter elektrisch isolierte Elektrode zumindest teilweise angeordnet ist. Um den Füllstand zu ermitteln, ist die Stärke des Stromflusses oder eine hierzu korrespondierende physikalische Größe in der Auswerteschaltung mit einem in dem Speicher abgespeicherten Referenzwert vergleichbar. Hierfür ist es erforderlich, dass der Vorratsbehälter elektrisch an Masse gelegt ist.

Aus der GB 1 287 148 A ist eine ähnliche Anordnung bekannt, bei der durch die Stromversorgung ein Wechselstrom zwischen der Stromversorgung und der Elektrode erzeugbar ist, wobei die Elektrode bei einem Füllstand unterhalb des zu sensierenden Füllstands mit dem Vorratsbehälter einen elektrischen Kondensator bildet.

Der Erfindung stellt sich somit das Problem eine Füllstandssensoreinrichtung anzugeben, die mit geringerem konstruktiven Aufwand realisierbar ist.

Erfindungsgemäß wird dieses Problem durch eine Füllstandssensoreinrichtung mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen insbesondere in einem geringeren konstruktiven Aufwand bei der Realisierung einer Füllstandssensoreinrichtung und damit einer kostengünstigeren Herstellung. Mit der erfindungsgemäßen Füllstandssensoreinrichtung ist es möglich, einen einzigen Füllstand, beispielsweise einen Mindestfüllstand, zu überwachen, also zu erkennen. Für die Überwachung mehrerer voneinander verschiedener Füllstände wäre eine Mehrfachanordnung der erfindungsgemäßen Füllstandssensoreinrichtung erforderlich. Eine galvanische Verbindung zwischen dem Vorratsbehälter und Masse ist nicht erforderlich. Darüber hinaus ist es hierdurch möglich, die Anordnung des Vorratsbehälters und damit der Füllstandssensoreinrichtung freier zu gestalten, so dass der an oder in dem Haushaltsgerät zur Verfügung stehende Bauraum platzsparender genutzt werden kann.

Eine vorteilhafte Weiterbildung sieht vor, dass die Elektrode als ein Teil eines Zulaufs oder als ein Teil des Auslaufs des Vorratsbehälters ausgebildet ist. Auf diese Weise ist die Füllstandssensoreinrichtung konstruktiv weiter vereinfacht und noch kostengünstiger realisierbar.

Eine besonders vorteilhafte Weiterbildung sieht vor, dass der Vorratsbehälter von dem Gehäuse des Haushaltsgeräts entnehmbar ausgebildet ist und die stromübertragende Verbindung zwischen der elektrischen Stromversorgung und der Elektrode durch die Überführung des Vorratsbehälters in dessen Betriebslage, in der der Vorratsbehälter zumindest mit dem Auslauf fluidleitend verbunden ist, automatisch herstellbar ist. Hierdurch ist der Benutzerkomfort verbessert.

Eine vorteilhafte Weiterbildung der vorgenannten Ausführungsform sieht vor, dass die stromübertragende Verbindung in der Betriebslage des Vorratsbehälters als eine galvanische Verbindung ausgebildet ist, wobei diese über korrespondierende elektrische Kontaktflächen der Elektrode und der elektrischen Steuerung herstellbar ist. Hierdurch ist die vorgenannte Ausführungsform auf besonders einfache Weise realisiert.

Grundsätzlich ist die Ausbildung der Kontaktflächen der vorgenannten galvanischen Verbindung in weiten geeigneten Grenzen wählbar. Vorteilhafterweise weist die der elektrischen Steuerung zugeordnete elektrische Kontaktfläche zumindest eine Erhebung auf und ist mittels eines Federelements derart vorgespannt, dass die Erhebung bei der Überführung des Vorratsbehälters in die Betriebslage in die der Elektrode zugeordnete elektrische Kontaktfläche teilweise eindringt. Auf diese Weise ist eine sichere galvanische Kontaktierung der beiden Kontaktflächen auch unter schwierigen Umgebungsbedingungen gewährleistet. Beispielsweise ist es denkbar, dass sich zumindest auf einer der beiden Kontaktflächen mit der Zeit eine elektrisch isolierende Beschichtung absetzt oder bildet. Diese Beschichtung würde dann bei einer erneuten Überführung des Vorratsbehälters in dessen Betriebslage von der Erhebung durchdrungen, so dass der galvanische Kontakt zwischen den beiden Kontaktflächen auf diese Weise hergestellt ist.

Eine andere vorteilhafte Weiterbildung einer erfindungsgemäßen Füllstandssensoreinrichtung mit einem von dem Haushaltsgerät entnehmbaren Vorratsbehälter sieht vor, dass die stromübertragende Verbindung über einen Koppelkondensator herstellbar ist, wobei eine Platte des Koppelkondensators mit der elektrischen Steuerung und die andere Platte des Koppelkondensators mit der Elektrode elektrisch leitend verbunden ist. Hierdurch ist die Ausführungsform einer Füllstandssensoreinrichtung mit einem von dem Haushaltsgerät entnehmbaren Vorratsbehälter auf konstruktiv besonders einfache Weise realisierbar.

Eine besonders vorteilhafte Weiterbildung der vorgenannten Ausführungsform sieht vor, dass die Spannungsfestigkeit des Koppelkondensators derart hoch gewählt ist, dass die Verwendung von elektrischer Sicherheitskleinspannung in der elektrischen Steuerung nicht erforderlich ist. Bei einer galvanischen Verbindung ist es aus Sicherheitsgründen stets erforderlich, dass in der elektrischen Steuerung Sicherheitskleinspannung verwendet wird. Wird nun die Spannungsfestigkeit des Koppelkondensators ausreichend groß gewählt, so ist dies nicht mehr notwendig. Die Folge ist eine weitere Vereinfachung der Anordnung und Kostenreduzierung. Die Mittel, die Spannungsfestigkeit des Koppelkondensators konstruktiv in gewünschter Weise zu beeinflussen, sind dem Fachmann hinlänglich bekannt.

Ein Ausführungsbeispiel der Erfindung ist in den Zeichnungen rein schematisch dargestellt und wird nachfolgend näher beschrieben. Es zeigt die
- Figur 1: ein Haushaltsgerät mit einer erfindungsgemäßen Füllstandssensoreinrichtung in einer ersten Ausführungsform in grob schematischer Darstellung,
- Figur 2: die Füllstandssensoreinrichtung aus Fig. 1 in einer Detailansicht im Bereich der galvanischen Verbindung zwischen der elektrischen Steuerung und der Elektrode,
- Figur 3: ein elektrisches Ersatzschaltbild der Anordnung aus Fig. 1 und
- Figur 4: ein Haushaltsgerät mit einer erfindungsgemäßen Füllstandssensoreinrichtung in einer zweiten Ausführungsform in grob schematischer Darstellung.

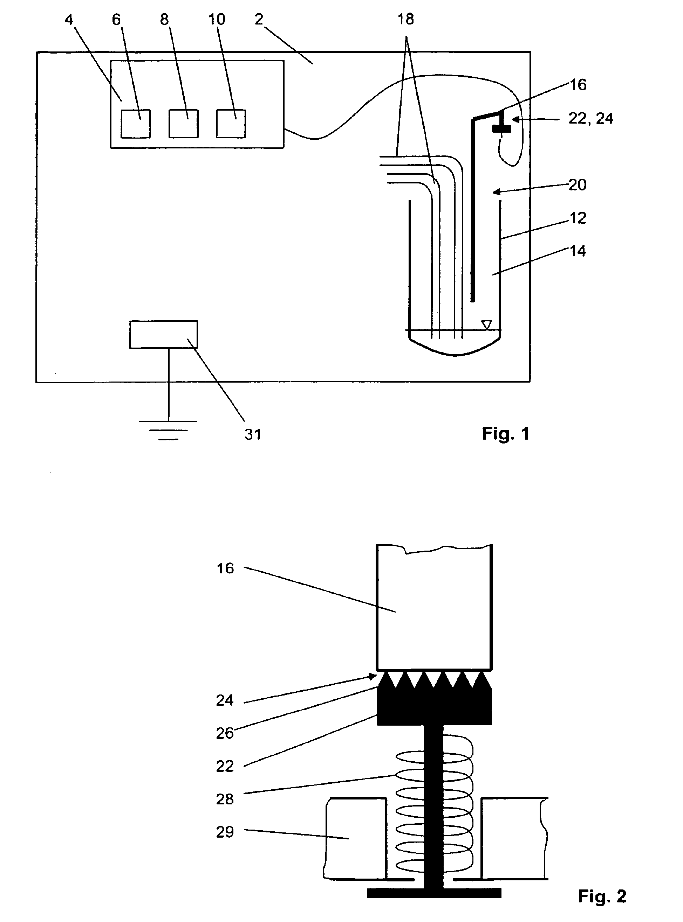

In Fig. 1 ist ein als Getränkebereiter ausgebildetes Haushaltsgerät 2 mit einer erfindungsgemäßen Füllstandssensoreinrichtung schematisch dargestellt. Die Füllstandssensoreinrichtung weist eine elektrische Steuerung 4 mit einer Auswerteschaltung 6, einem Speicher 8 und einer elektrischen Stromversorgung 10 auf, wobei die elektrische Stromversorgung 10 eine alternierende Spannung und damit einen Wechselstrom erzeugt. Ferner beinhaltet die Füllstandssensoreinrichtung einen Vorratsbehälter 12 für Milch, der aus Edelstahl hergestellt ist. Alternativ hierzu wäre es auch denkbar, dass der Vorratsbehälter 12 aus einem anderen elektrisch leitfähigem Material, beispielsweise Aluminium, gefertigt ist oder auf seiner dem Vorratsraum 14 zugewandten Seite der Behälterwand eine elektrisch leitfähige Beschichtung trägt.

Darüber hinaus weist die erfindungsgemäße Füllstandssensoreinrichtung eine teilweise in den Vorratsraum 14 hineinragende und von dem Vorratsbehälter 12 elektrisch isolierte Elektrode 16 auf, die in dem Betriebszustand der Füllstandssensoreinrichtung mit der elektrischen Stromversorgung 10 stromübertragend verbunden ist.

Der Vorratsbehälter 12 des vorliegenden Ausführungsbeispiels weist zwei als Milchleitungen ausgebildete Ausläufe 18 auf, durch die die in dem Vorratsbehälter 12 bevorratete Milch zu den nicht dargestellten Milchentnahmestellen des Getränkebereiters 2 leitbar ist. Der Vorratsbehälter 12 ist hier über einen als Öffnung ausgebildeten Zulauf 20 mit Milch befüllbar.

Hierzu ist der Vorratsbehälter 12, der in dem Betriebszustand der Füllstandssensoreinrichtung in dem inneren des Getränkebereiters 2 gehaltert ist, aus dem Getränkebereiter 2 entnehmbar ausgebildet, was nachfolgend noch näher erläutert wird.

Alternativ hierzu wäre es auch möglich, die Elektrode 16 mit einem der Ausläufe 18 konstruktiv zu kombinieren, so dass eine weitere Reduzierung der Bauteile möglich ist. Dies ist besonders einfach möglich, wenn der betreffende Auslauf 18, beispielsweise aus hygienischen Gründen, aus Edelstahl oder einem anderen elektrisch leitfähigen Material hergestellt wird.

Sofern der Zulauf 20 ebenfalls als eine Milchleitung ausgebildet ist, wäre auch eine hierzu analoge Kombination der Elektrode 16 mit dem Zulauf 20 denkbar.

In dem vorliegenden Ausführungsbeispiel wird der aus dem Getränkebereiter 2 entnehmbare Vorratsbehälter 12 in dessen Betriebslage, in der der Vorratsbehälter 12 mit den Ausläufen 18 fluidleitend verbunden ist, mittels einer galvanischen Verbindung stromübertragend mit der elektrischen Stromversorgung 10 der elektrischen Steuerung 4 verbunden. Um den Vorratsbehälter 12 von dem Getränkebereiter 2 entnehmen zu können, ist eine erste elektrische Kontaktfläche 22 mit der elektrischen Steuerung 4 und eine zweite Kontaktfläche 24 mit der Elektrode 16 in Stromübertragungsverbindung. Bei der Ankoppelung des Vorratsbehälters 12 an den Getränkebereiter 2, also bei dessen Überführung in die in Fig. 1 dargestellte Betriebslage, werden die beiden Kontaktflächen 22, 24 auf dem Fachmann an sich bekannte Weise automatisch miteinander in stromübertragenden Kontakt gebracht.

Die Ausbildung der Kontaktflächen 22, 24 und deren Zusammenwirken ist nachfolgend anhand von Fig. 2 näher dargestellt.

Wie aus Fig. 2 deutlich hervorgeht, weist die erste Kontaktfläche 22 eine Vielzahl von kleinen Erhebungen 26 auf, die den elektrischen Kontakt zwischen den beiden Kontaktflächen 22, 24 sicher gewährleisten. Hierzu ist die Kontaktfläche 22 auf dem Fachmann bekannte Weise mittels eines Federelements 28 in Richtung auf der Bildebene nach oben gegen eine an dem Gehäuse des Getränkebereiters 2 angeordnete Halterung 29 vorgespannt. Bei der Überführung des Vorratsbehälters 12 in dessen in Fig. 1 dargestellte Betriebslage schleift die als Kontaktfläche 24 ausgebildete Stirnfläche der Elektrode 16 über die Erhebungen 26 der Kontaktfläche 22, wodurch diese aufgrund der Vorspannung in die Oberfläche der Kontaktfläche 24 eindringen. Durch diese Ausbildung der Kontaktflächen 22, 24 ist eine sichere elektrische Kontaktierung auch bei möglicherweise passivierten Oberflächen gewährleistet.

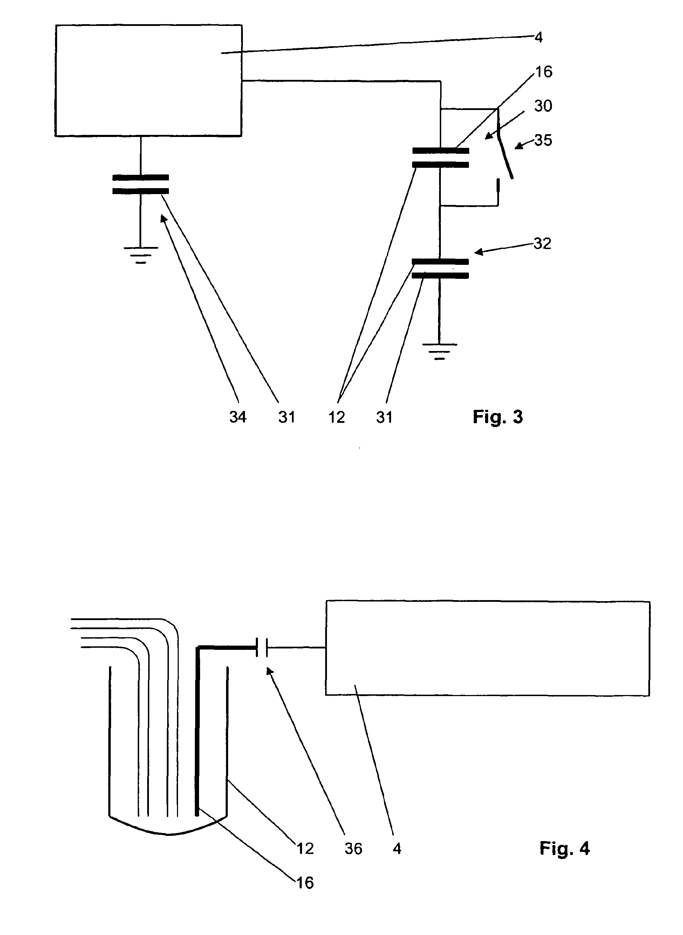

Wie in Fig. 3 sinnbildlich dargestellt, bildet die Elektrode 16 mit dem Vorratsbehälter 12 bei einem Füllstand der Milch unterhalb des zu sensierenden Füllstands, also unterhalb der Elektrode 16, einen elektrischen Kondensator 30 mit der Kapazität c1 und der Vorratsbehälter 12 mit einem an Masse liegenden anderen Haushaltsgeräteteil 31 des Getränkebereiters 2 einen elektrischen Kondensator 32 mit der Kapazität c2, wobei beide Kondensatoren 30, 32 elektrisch in Reihe geschaltet sind. Aufgrund der naturgemäß viel kleineren Oberfläche der Elektrode 16 im Vergleich zu der Oberfläche des Vorratsbehälters 12 ist die Kapazität c1 sehr viel kleiner als die Kapazität c2.

Die Elektrode 16, also die eine Platte des Kondensators 30, ist in dem Betriebszustand der Füllstandssensoreinrichtung, also wenn der Vorratsbehälter 12 in der Betriebslage ist, über die oben erläuterten Kontaktflächen 22, 24 mit der elektrischen Steuerung 4 stromübertragend verbunden. Analog zu dem Vorratsbehälter 12 bildet die elektrische Steuerung 4 über die Umgebungsluft mit dem an Masse liegenden anderen Haushaltsgeräteteil 31 des Getränkebereiters 2 einen elektrischen Kondensator 34 mit der Kapazität c3. Die elektrische Steuerung 4 und insbesondere der Vorratsbehälter 12 sind in dem Betriebszustand der Füllstandssensoreinrichtung potentialfrei an dem Getränkebereiter 2 gehalten. Potentialfrei bedeutet, dass keine galvanische Verbindung mit Masse vorliegt, sondern die elektrische Verbindung mit Masse allein über die Umgebungsluft erfolgt.

Die Funktionsweise der erfindungsgemäßen Füllstandssensoreinrichtung wird anhand der Fig. 1 bis 3 nachfolgend näher erläutert.

Der Vorratsbehälter 12 befindet sich in der Betriebslage in dem Inneren des Getränkebereiters 2. Da der Füllstand der in dem Vorratsraum 14 bevorrateten Milch, wie aus Fig. 1 ersichtlich, unterhalb der Elektrode 16 liegt, bilden die Elektrode 16, der Vorratsbehälter 12 und die elektrische Steuerung 4 die anhand von Fig. 3 oben erläuterte elektrische Schaltung. Der durch die elektrische Stromversorgung 10 erzeugte Wechselstrom zwischen der elektrischen Stromversorgung 10 und der Elektrode 16 ist über die Auswerteschaltung 6 auf dem Fachmann bekannte Weise, beispielsweise mittels einer elektrischen Spannungsmessung an einem elektrisch parallel geschalteten und nicht näher dargestellten Widerstand, mess- und auswertbar. Die gemessene elektrische Spannung wird in der Auswerteschaltung 6 mit einem in dem Speicher 8 abgespeicherten Referenzwert verglichen. Aufgrund der beiden in Reihe geschalteten Kondensatoren 30, 32 und dem damit verbundenen hohen kapazitiven Widerstand fließt lediglich ein geringer Wechselstrom, so dass der gemessene Spannungswert kleiner als der abgespeicherte Referenzwert ist. Auf einer nicht dargestellten Anzeige des Getränkebereiters 2 erscheint die Meldung an den Benutzer, dass der Mindestfüllstand in dem Vorratsbehälter 12 zu niedrig ist und dass Milch nachgefüllt werden muss. Alternativ hierzu wäre es auch denkbar, dass ein akustisches Signal ausgegeben wird. Ferner wäre es bei einem als Milchleitung ausgebildeten Zulauf 20 möglich, dass die Befüllung des Vorratsbehälters 12 auch automatisch über eine Zulaufleitung und ein darin befindliches Ventil erfolgt.

Bei dem vorliegenden Ausführungsbeispiel erfolgt die Mitteilung an den Benutzer, den Vorratsbehälter 12 mit Milch aufzufüllen, aufgrund der konstruktiven Ausbildung zu einem Zeitpunkt, zu dem über die Ausläufe 18 noch Milch angesaugt werden kann. Dies ist dadurch erreicht, dass die Ausläufe 18 tiefer in den Vorratsbehälter 12 hinabreichen, als die Elektrode 16. Auf diese Weise ist sichergestellt, dass über die Ausläufe 18 keine Luft angesaugt und damit gefördert wird. Um die gleiche Wirkung mit der bereits genannten Alternative zu erreichen, bei der die Elektrode 16 und der Auslauf 18 als ein einziges Bauteil ausgebildet sind, wäre es denkbar, auf das untere Ende des dann auch als Elektrode ausgebildeten Auslaufs 18 ein Verlängerungsstück aus elektrisch nicht leitendem Material, beispielsweise einen Kunststoffschlauch, aufzustecken. Hierdurch ist der vorgenannte Effekt auf konstruktiv einfache Weise erzielt. Selbstverständlich stehen dem Fachmann hierfür noch andere geeignete Alternativen zur Verfügung.

Aufgrund der angezeigten Meldung öffnet der Benutzer eine nicht dargestellte Servicetür des Getränkebereiters 2 und entnimmt den Vorratsbehälter 12 zwecks Befüllung mit Milch. Nach dem Befüllungsvorgang überführt der Benutzer den Vorratsbehälter 12 wieder in die oben erläuterte Betriebslage. Dabei wird eine galvanische Verbindung zwischen den beiden Kontaktflächen 22, 24 hergestellt, so dass wieder ein Wechselstrom zwischen elektrischer Stromversorgung 10 und Elektrode 16 fließen kann. Da der Füllstand der Milch in dem Vorratsbehälter 12 oberhalb des unteren Endes der Elektrode 16 liegt, wird der Kondensator 30 überbrückt. Dies ist in Fig. 3 durch einen Schalter 35 symbolisiert. Bei einem Füllstand oberhalb des unteren Endes der Elektrode 16 ist der Schalter 35 aus Fig. 3 in der nicht dargestellten Schließlage. Hierdurch ist von den Kondensatoren 30, 32 lediglich noch der Kondensator 32 kapazitiv wirksam, was zu einer Verringerung des kapazitiven Widerstands und damit einem Anstieg des zwischen der elektrischen Stromversorgung 10 und der Elektrode 16 fließenden Wechselstroms führt. Die gemessene elektrische Spannung ist nun größer als der abgespeicherte Referenzwert und die Anzeige der obigen Meldung erlischt automatisch.

In Fig. 4 ist eine zweite Ausführungsform der erfindungsgemäßen Füllstandssensoreinrichtung dargestellt, bei der anstelle der galvanischen Verbindung über die Kontaktflächen 22, 24 in der Betriebslage des entnehmbaren Vorratsbehälters 12 die Elektrode 16 mittels eines Koppelkondensators 36 stromübertragend mit der elektrischen Stromversorgung 10 verbunden ist. Dabei ist eine Platte des Koppelkondensators 36 mit der elektrischen Stromversorgung 10 und die andere Platte mit der Elektrode 16 elektrisch leitend verbunden. Hierdurch ist die erfindungsgemäße Füllstandssensoreinrichtung bei Ausführungsformen mit entnehmbaren Vorratsbehältern 12 konstruktiv noch einfacher zu realisieren. Ferner würden elektrisch isolierende Ablagerungen und Schichten auf den Platten des Koppelkondensators 36 die Füllstandssensierung nicht stören.

Sofern die Kapazität des Koppelkondensators 36 auf dem Fachmann an sich bekannte Weise ausreichend hoch gewählt wird, bietet diese zweite Ausführungsform darüber hinaus den Vorteil, dass in der elektrischen Steuerung 4 auch Netzspannung verwendet werden kann; Sicherheitskleinspannung ist dann nicht zwingend erforderlich.

Die erfindungsgemäße Füllstandssensoreinrichtung ist nicht auf das erläuterte Ausführungsbeispiel begrenzt. Neben der Sensierung von Milch ist auch die Sensierung anderer, elektrisch leitfähiger Fluide möglich. Ferner ist die Füllstandssensoreinrichtung auch bei Vorratsbehältern einsetzbar, die fest an oder in dem Haushaltsgerät integriert sind. Je hochfrequenter der zwischen der elektrischen Stromversorgung 10 und der Elektrode 16 fließende Wechselstrom gewählt ist, desto mehr wirkt die Elektrode 16, für den Fall, dass der Füllstand niedriger als das untere Ende der Elektrode 16 ist, oder der Vorratsbehälter 12, für den Fall, dass der Füllstand höher als das untere Ende der Elektrode 16 ist, wie eine Sendeantenne.

## Patentansprüche

1. Füllstandssensoreinrichtung, die ein Haushaltsgerät (2) und einen Vorratsbehälter (12) mit einem Auslauf (18) zur Bevorratung eines elektrisch leitfähigen Fluids des Haushaltsgeräts (2) aufweist, mit einer elektrischen Steuerung (4) die eine Auswerteschaltung (6), einen Speicher (8) und eine Stromversorgung (10) aufweist, wobei der Vorratsbehälter (12) aus einem elektrisch leitendem Material hergestellt ist oder eine in dem Betriebszustand der Füllstandssensoreinrichtung elektrisch leitende Beschichtung aufweist und in dessen Vorratsraum (14) eine mit der elektrischen Stromversorgung (10) stromübertragend verbundene und von dem Vorratsbehälter (12) elektrisch isolierte Elektrode (16) zumindest teilweise angeordnet ist und in der Auswerteschaltung (6) die Stärke des Stromflusses oder eine hierzu korrespondierende physikalische Größe mit einem in dem Speicher (8) abgespeicherten Referenzwert vergleichbar ist, und wobei durch die Stromversorgung (10) ein Wechselstrom zwischen der Stromversorgung (10) und der Elektrode (16) erzeugbar ist, wobei die Elektrode (16) bei einem Füllstand unterhalb des zu sensierenden Füllstands mit dem Vorratsbehälter (12) einen elektrischen Kondensator (30) bildet,
**dadurch gekennzeichnet,**
**dass** der Vorratsbehälter (12) bei einem Füllstand unterhalb des zu sensierenden Füllstands über die Umgebungsluft mit einem an Masse liegenden anderen Haushaltsgeräteteil (31) einen elektrischen Kondensator (32) bildet und beide Kondensatoren (30, 32) elektrisch in Reihe angeordnet sind.

2. Füllstandssensoreinrichtung nach Anspruch 1,
**dadurch gekennzeichnet,**
**dass** die Elektrode (16) als ein Teil eines Zulaufs (20) oder als ein Teil des Auslaufs (18) des Vorratsbehälters (12) ausgebildet ist.

3. Füllstandssensoreinrichtung nach Anspruch 1 oder 2,
**dadurch gekennzeichnet,**
**dass** der Vorratsbehälter (12) von dem Gehäuse des Haushaltsgeräts (2) entnehmbar ausgebildet ist und die stromübertragende Verbindung zwischen der elektrischen Stromversorgung (10) und der Elektrode (16) durch die Überführung des Vorratsbehälters (12) in dessen Betriebslage, in der der Vorratsbehälter (12) zumindest mit dem Auslauf (18) fluidleitend verbunden ist, automatisch herstellbar ist.

4. Füllstandssensoreinrichtung nach Anspruch 3,
**dadurch gekennzeichnet,**
**dass** die stromübertragende Verbindung in der Betriebslage des Vorratsbehälters (12) als eine galvanische Verbindung ausgebildet ist, wobei diese über korrespondierende elektrische Kontaktflächen (22, 24) der Elektrode (16) und der elektrischen Steuerung (4) herstellbar ist.

5. Füllstandssensoreinrichtung nach Anspruch 4,
**dadurch gekennzeichnet,**
**dass** die der elektrischen Steuerung zugeordnete elektrische Kontaktfläche zumindest eine Erhebung aufweist und mittels eines Federelements derart vorgespannt ist, dass die Erhebung bei der Überführung des Vorratsbehälters in die Betriebslage in die der Elektrode zugeordnete elektrische Kontaktfläche teilweise eindringt.

6. Füllstandssensoreinrichtung nach Anspruch 3,
**dadurch gekennzeichnet,**
**dass** die stromübertragende Verbindung über einen Koppelkondensator (36) herstellbar ist, wobei eine Platte des Koppelkondensators (36) mit der elektrischen Steuerung (4) und die andere Platte des Koppelkondensators (36) mit der Elektrode (16) elektrisch leitend verbunden ist.

7. Füllstandssensoreinrichtung nach Anspruch 6,
**dadurch gekennzeichnet,**
**dass** die Spannungsfestigkeit des Koppelkondensators (36) derart hoch gewählt ist, dass die Verwendung von elektrischer Sicherheitskleinspannung in der elektrischen Steuerung (4) nicht erforderlich ist.

## Claims

1. Filling level sensor device, which has a domestic appliance (2) and a storage tank (12), with an outlet (18), for storing an electrically conductive liquid of the domestic appliance (2), comprising an electrical control means (4) having an evaluation circuit (6), a storage means (8) and a power supply (10), the storage container (12) being produced from an electrically conductive material or having a coating which is electrically conductive in the operational mode of the filling level sensor device, and the storage container having storage space (14) in which an electrode (16), which is connected in an current-carrying manner to the electric power supply (10) and is electrically isolated from the storage container (12), is arranged at least in part, and it being possible in the evaluation circuit (6) to compare the strength of the flow of current or a physical variable corresponding thereto with a reference value stored in the storage means (8) in the evaluation circuit (6), and it being possible to generate an alternating current between the power supply (10) and the electrode (16) by means of the power supply (10), the electrode (16) forming an electric capacitor (30) with the storage container (12) when the filling level is lower than the filling level to be detected,
**characterised in that**
when the filling level is lower than the filling level to be detected, the storage container (12) forms, with another domestic appliance component (31) connected to earth, an electric capacitor (32) by way of the ambient air, and both capacitors (30, 32) are electrically connected in series.

2. Filling level sensor device according to claim 1,
**characterised in that**
the electrode (16) is formed as a part of an inlet (20) or as part of the outlet (18) of the storage container (12).

3. Filling level sensor device according to either claim 1 or claim 2,
**characterised in that**
the storage container (12) is formed so as to be removable from the housing of the domestic appliance (2) and it is possible to produce the current-carrying connection between the electric power supply (10) and the electrode (16) automatically by transferring the storage container (12) into the operational position thereof, in which the storage container (12) is connected at least to the outlet (18) so as to allow liquid to be conveyed.

4. Filling level sensor device according to claim 3,
**characterised in that**
the current-carrying connection in the operational position of the storage container (12) is formed as an electrical connection, it being possible to produce this connection via corresponding electric contact faces (22, 24) of the electrode (16) and of the electric control means (4).

5. Filling level sensor device according to claim 4,
**characterised in that**
the electric contact face associated with the electric control means has at least one raised portion and is biased by a spring member in such a way that the raised portion penetrates in part into the electric contact face associated with the electrode when the storage container is transferred into the operational position.

6. Filling level sensor device according to claim 3,
**characterised in that**
it is possible to produce the current-carrying connection by means of a coupling capacitor (36), a plate of the coupling capacitor (36) being connected in an electrically conductive manner to the electric control means (4) and the other plate of the coupling capacitor (36) being connected in an electrically conductive manner to the electrode (16).

7. Filling level sensor device according to claim 6,
**characterised in that**
the electric strength of the coupling capacitor (36) is selected to be sufficiently high that it is not necessary to use safety extra-low voltage in the electric control means (4).

## Revendications

1. Equipement de détection de niveau, qui présente un appareil ménager (2) et un réservoir de stockage (12) avec une sortie (18) pour le stockage d'un fluide électriquement conducteur de l'appareil ménager (2), avec une commande électrique (4) qui présente un circuit d'analyse (6), une mémoire (8) et une alimentation électrique (10), le réservoir de stockage (12) étant réalisé avec un matériau électriquement conducteur ou présentant un revêtement électriquement conducteur dans l'état de fonctionnement de l'équipement de détection de niveau, et une électrode (16), raccordée à l'alimentation électrique (10) de façon à transporter le courant et électriquement isolée du réservoir de stockage (12), étant disposée au moins partiellement dans sa chambre de stockage (14), et l'intensité du courant électrique ou une grandeur physique lui correspondant pouvant être, dans le circuit d'analyse (6), comparée à une valeur de référence enregistrée dans la mémoire (8), et un courant alternatif pouvant être produit par l'alimentation électrique (10) entre l'alimentation électrique (10) et l'électrode (16), l'électrode (16), en présence d'un niveau inférieur au niveau à détecter, formant avec le réservoir de stockage (12) un condensateur électrique (30),
**caractérisé en ce que**
le réservoir de stockage (12), en présence d'un niveau inférieur au niveau à détecter, forme par le biais de l'air ambiant un condensateur électrique (32) avec une autre partie d'appareil ménager (31) mise à la masse, et **en ce que** les deux condensateurs (30, 32) sont disposés électriquement en série.

2. Equipement de détection de niveau selon la revendication 1,
**caractérisé en ce que**
l'électrode (16) est constituée comme une partie d'une alimentation (20) ou comme une partie de la sortie (18) du réservoir de stockage (12).

3. Equipement de détection de niveau selon la revendication 1 ou 2,
**caractérisé en ce que**
le réservoir de stockage (12) est constitué de façon à pouvoir être enlevé du boîtier de l'appareil ménager (2), et **en ce que** la liaison transportant l'électricité entre l'alimentation électrique (10) et l'électrode (16) peut être établie automatiquement par le transfert du réservoir de stockage (12) dans sa position de fonctionnement dans laquelle le réservoir de stockage (12) est raccordé, en conduisant le fluide, au moins à la sortie (18).

4. Equipement de détection de niveau selon la revendication 3,
**caractérisé en ce que** la liaison transportant l'électricité, dans la position de fonctionnement du réservoir de stockage (12), est constituée en tant que liaison galvanique, celle-ci pouvant être réalisée par le biais de surfaces de contact (22, 24) électriques correspondantes de l'électrode (16) et de la commande électrique (4).

5. Equipement de détection de niveau selon la revendication 4,
**caractérisé en ce que** la surface de contact électrique affectée à la commande électrique présente au moins une élévation et est pré-tendue au moyen d'un élément de ressort de sorte que l'élévation, lors du transfert du réservoir de stockage dans la position de fonctionnement, pénètre partiellement dans la surface de contact électrique affectée à l'électrode.

6. Equipement de détection de niveau selon la revendication 3,
**caractérisé en ce que**
la liaison transportant l'électricité est réalisable par le biais d'un condensateur de couplage (36), une plaque du condensateur de couplage (36) étant raccordée de façon électriquement conductrice à la commande électrique (4), et l'autre plaque du condensateur de couplage (36) à l'électrode (16).

7. Equipement de détection de niveau selon la revendication 6,
**caractérisé en ce que**
la rigidité diélectrique du condensateur de couplage (36) est choisie à un niveau élevé de sorte que l'utilisation d'une tension minimale de sécurité électrique n'est pas nécessaire dans la commande électrique (4).
